# EUROPEAN PATENT APPLICATION

(11) **EP 1 830 009 A1**
(43) Date of publication of application: **05.09.2007**
(21) Application number: 06022305.4
(22) Date of filing: 25.10.2006
(51) Int. Cl.: E03C 1/10, F16K 15/06

(54) **Backflow prevention device**

(30) Priority: 01.03.2006 US 365413; 25.04.2006 US 411735
(71) Applicant: Rain Bird Corporation, Glendora CA 91741-2475 (US)
(72) Inventor: Clayton, Gary A., Vail, Arizona 85641 (US); Olivas, Victor S., Tucson, Arizona 85706 (US)
(74) Representative: HOFFMANN EITLE

(57) **Abstract**

A backflow prevention device (2) includes a main body (4) holding a removable cartridge (68). The removable cartridge (68) houses two independently acting check valves (94,100) and, optionally, a relief valve. A first portion (72) of the cartridge (68) may be retracted into a second portion (70) of the cartridge, thereby reducing the overall length of the cartridge (68) and facilitating the removal of the cartridge from the main body (4) without the need to remove the backflow prevention device from a water supply system. The relief valve is contained in a removable cartridge. Each check valve may have a self cleaning plunger bore comprising at least one spiral groove.

## Description

### Cross-Reference to Related Application

This application claims priority to U.S. Application No. 11/365,413, filed March 1, 2006, and U.S. Application No. 11/411,735, filed April 25, 2006. These applications are hereby incorporated by reference herein in their entirety.

### Field of the Invention

The present invention generally relates to a backflow prevention device and, in particular, to a removable cartridge housing check valves, a relief valve cartridge, and/or a self cleaning check valve for a backflow prevention device.

### Background of the Invention

Backflow prevention devices are used to protect potable water supplies from contamination. Backflow prevention devices are typically installed in pipelines between a main water supply and service lines that feed users such as industrial or commercial sites or residences. Many localities legally mandate their use.

Backflow is caused by abnormalities in the water distribution system such as backpressure or backsiphonage. Backpressure occurs when the water pressure is higher in the downstream system than in the water supply. Backsiphonage can occur when the water supply pressure drops, such as when a water main breaks or severe demands are placed on the water supply. Either condition could lead to backflow, the flow of water from the downstream system back into the water supply. Backflow is undesirable because it may cause contamination of the potable water supply.

Two common types of assemblies are the double check (DC) and the reduced pressure (RP) backflow prevention devices. The double check devices, commonly used with non-health hazards, have two check valves between two shut-off valves. The reduced pressure devices, commonly used to prevent health hazard, have two check valves, with a relief valve located between them, and two shut-off valves.

Backflow prevention devices commonly include two independently acting check valves, internally loaded to a closed position. Each check valve permits water flow in only a single direction, from the main water supply toward the service line. If the pressure drop across a check valve falls below a predetermined threshold, typically about 1 psi, the loading of the check valve should cause it to close, thereby preventing the flow of water backwards through the device. The first check valve (in the direction of flow) provides redundancy in case of failure of the second check valve.

Some backflow prevention devices further include a hydraulically operated relief valve to vent the zone between the two check valves to atmosphere. The relief valve is configured so that if the pressure in the zone between the two check valves gets within a predetermined threshold of the supply pressure, typically about 2 psi, the relief valve will open and dump water from the zone. The relief valve is usually installed over a drain or plumbed to a drain with an appropriate air gap.

Ball valves are provided upstream and downstream of backflow prevention devices, allowing isolation of the device. Test cocks provide the ability to measure pressure at various points in the backflow prevention device and to supply water at desired pressures for purposes of testing the functionality of the check valves to insure proper operation of the device without removing the device from the water line. Test cocks are typically located at four sites: on the upstream side of the inlet ball valve; between the inlet ball valve and the first check valve; between the two check valves; and between the second check valve and the outlet ball valve.

It is desirable to access the check valves or the relief valve (when present) from time to time for purposes of inspection, maintenance, repair, or replacement. With current backflow prevention devices, this generally requires either removing the device from the water line or accessing the valves through ports provided on the device.

### Brief Description of the Drawings

FIG. 1 is an cutaway side view of a preferred embodiment of a backflow prevention device embodying features of the present invention;

FIG. 2 is a perspective view of the backflow prevention device of FIG. 1;

FIG. 3 is cutaway view of a slider receiver of the backflow prevention device of FIG.1;

FIG. 4 is a cutaway view of a slider of the backflow prevention device of FIG.1;

FIG. 5 is an exploded view of a check valve assembly of the backflow prevention device of FIG.1;

FIG. 6 is a cutaway side view of an alternative embodiment of a backflow prevention device embodying features of the present invention;

FIG. 7 is a perspective view of a slider receiver of the backflow prevention device of FIG. 6; and

FIG. 8 is a cutaway perspective view of a relief valve of the backflow prevention device of FIG. 6;

FIG. 9 is a cutaway side view of an alternative embodiment of a backflow prevention device embodying features of the present invention;

FIG. 10 is a perspective view of a main body of the backflow prevention device of FIG. 9;

FIG. 11 is a perspective view of a main body and check valve cartridge of the backflow prevention device of FIG. 9 having the check valve cartridge in an extended position;

FIG. 12 is a perspective view of a main body and check valve cartridge of the backflow prevention device of FIG. 9 having the check valve cartridge in a retracted position;

FIG. 13 is an exploded view of a check valve cartridge of the backflow prevention device of FIG. 9; and

FIG. 14 is an exploded view of an alternative embodiment of a check valve cartridge of the backflow prevention device of FIG. 9.

### Detailed Description of the Preferred Embodiment

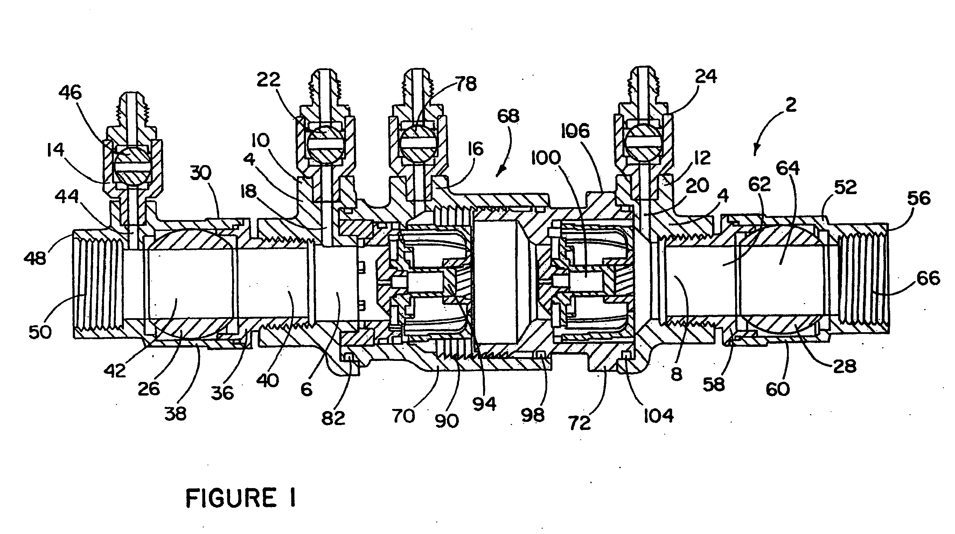

In FIG. 1, there is illustrated a backflow prevention device 2. A main body 4 provides structural support for the other components and defines fluid flow passages 6, 8 at each end of the main body 4. Test ports 10, 12 are each in fluid communication with one of the fluid flow passages 6, 8 via a test port channel 18, 20. The test ports 10, 12 allow for evaluation of the function of the backflow prevention device 2 in a manner described below. A test port valve 22, 24 is attached to each test port 10, 12.

An inlet ball valve 26 and an outlet ball valve 28 make it possible to isolate the backflow prevention device 2 from the water system to which it is connected. The inlet ball valve 26 is mounted in a ball valve housing 30 which is mounted to the main body 4, preferably by means of a threaded engagement. The ball valve housing 30 may comprise a mounting portion 36 and a valve containment portion 38, each defining a fluid flow passage 40, 42 respectively. A test port 14 is in fluid communication with the fluid flow passage 40 of the valve containment portion 38 via a test port channel 44. A test port valve 46 is attached to the test port 14. The upstream end 48 of the ball valve housing 30 is configured for connection to a source of water, preferably via internal threads 50.

The outlet ball valve 28 is mounted in a second ball valve housing 52 which is mounted to the main body 4, preferably by means of a threaded engagement. The second ball valve housing 52 may comprise a mounting portion 58 and a valve containment portion 60, each defining a fluid flow passage 62, 64. The downstream end 56 of the second ball valve housing 52 is configured for connection to a downstream system, preferably via internal threads 66.

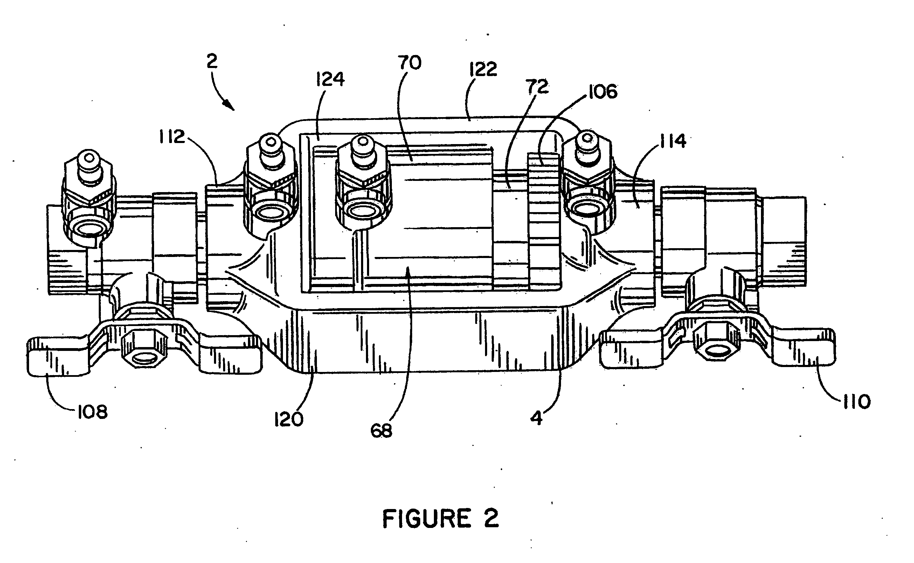

Referring now to FIG. 2, the main body 4 comprises an upstream portion 112 and a downstream portion 114, each having a fluid flow path 6, 8 (FIG. 1) respectively, therethrough. Generally flat, parallel bridging portions 120, 122 join the upstream portion 112 and downstream portion 114 of the main body 4. The upstream portion 112, the downstream portion 114 and the two bridging members 120, 122 define a generally rectangular access passage 124 through the main body 4. The access passage facilitates the installation, removal, and manipulation of a removable cartridge, denoted generally by the reference numeral 68.

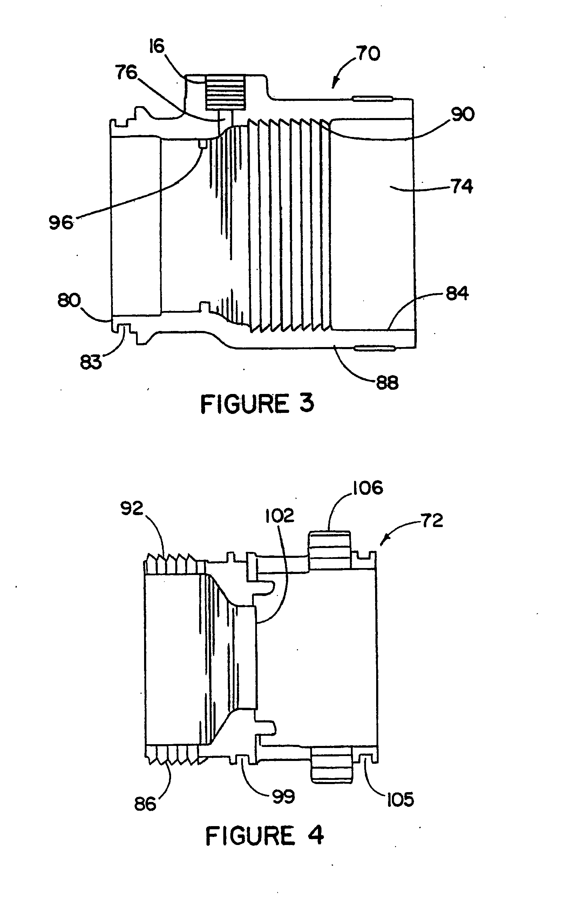

Referring again to FIG. 1, the removable cartridge 68 is mounted in the main body 4. The removable cartridge 68 comprises a slider receiver 70 and a slider 72. The slider receiver 70, best seen in FIG. 3, defines a fluid flow passage 74. A test port 16 is in fluid communication with the fluid flow passage 74 of the slider receiver 70 via a test port channel 76. A test port valve 78 is attached to the test port 16. In the preferred embodiment, the upstream end 80 of the slider receiver 70 is configured to fit with the main body 4. An o-ring 82 (FIG. 1), held in place by a groove 83 in the outer surface of the slider receiver 70, provides for a water tight seal between the slider receiver 70 and the main body 4. The downstream portion 84 of the slider receiver 70 is configured to receive the upstream portion 86 of the slider 72, best seen in FIG. 4. The downstream portion 84 of the slider receiver 70 contains female threads 90 configured for engagement with male threads 92 on the upstream portion 86 of the slider 72.

A first check valve 94 (FIG. 1) is located in the slider receiver 70. A ridge 96 on the inside surface of the slider receiver 70 helps to fix the check valve 94 in position against the main body 4 when the removable cartridge 68 is mounted in the main body 4. The check valve 94 is of a standard type well known in the industry and is biased to a normally closed position. The check valve allows flow through the valve in only one direction, downstream.

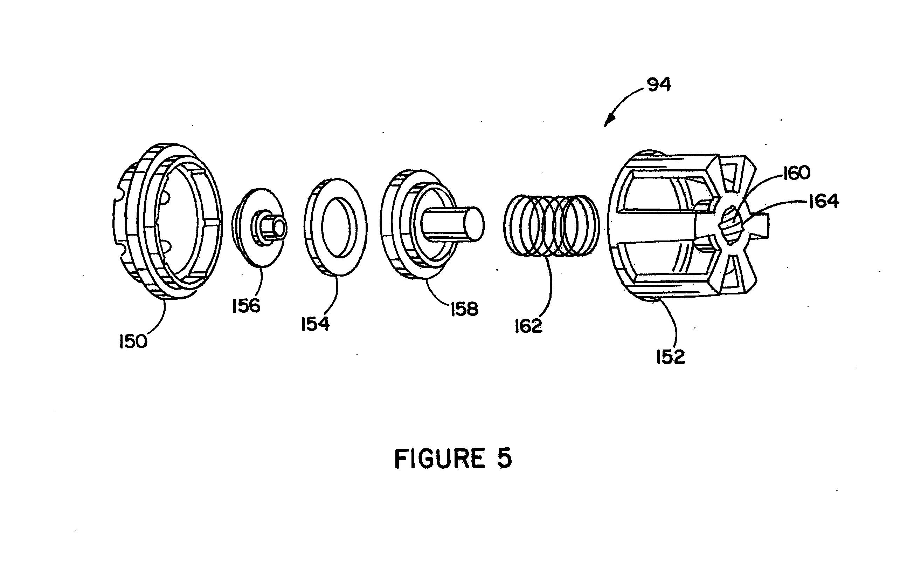

Referring now to FIG. 5, the check valve 94 comprises a valve seat 150 and a valve cage 152. A valve seal 154 is fixed to a plunger 158 using a seal retainer 156. The plunger 158 fits into a central bore 160 in the valve cage 152 and is free to move in a reciprocating fashion within the central bore 160 of the valve cage 152. A spring 162 provides force to bias the check valve 94 toward a closed position.

It is desirable that the plunger 158 not stick within the central bore 160 lest the check valve 94 jam in an open position. Under reverse flow conditions, contaminated water will flow into the valve cage 152 from the normally downstream direction. Spiral grooves 164 are provided in the central bore 160 in order to assist the plunger 158 in flushing any particulate matter that might have flowed into the central bore and reducing the chance of the particulate matter wedging between the plunger 158 and the central bore 160 and causing the check valve 94 to stick.

The downstream end of the slider 72, best seen in FIG. 1, is configured to fit with the main body 4. An o-ring 98, held in place by a groove 99 (FIG. 4) in the outer surface of the slider 72, provides for a water tight seal between the slider 72 and the slider receiver 70 downstream of the threads 90. A second check valve 100 is located in the slider 72. A ridge 102 on the inside surface of the slider 72 helps to fix the position of the check valve 100 against the main body 4 when the removable cartridge 68 is mounted in the main body 4. An o-ring 104, held in place by a groove 105 in the outer surface of the slider 72, provides for a water tight seal between the slider and the main body 4.

Under normal operating conditions, if the water flow through the backflow prevention device 2 reduces to the point that the pressure drop across the second check valve 100 is less than 1.0 psi, the second check valve 100 would close, preventing flow in the reverse direction. If the second check valve 100 fails, the first check valve 94 would close, providing backup protection.

A geared or knurled exterior surface 106 allows for manual rotation of the slider 72 relative to the slider receiver 70 and the main body 4. Rotating the slider 72 in one direction causes the slider 72 to telescopically screw into the slider receiver 70, thereby reducing the overall length of the removable cartridge 68 and facilitating the removal of the cartridge 68 from the main body 4.

Removing the cartridge 68 makes it possible to inspect, maintain, repair, or replace the check valves 94 100. After inspecting or servicing the check valves 94, 100 the cartridge 68 can be replaced by inserting either end of the cartridge 68 into the main body 4 and then unscrewing the slider 72 from the slider receiver 70 until the two ends of the cartridge 68 seat against the main body 4.

Many localities and several industry organizations mandate the location of the four test ports 10, 12, 14, 16 as described herein. The test ports 10, 12, 14, 16 allow testing of the functionality of the backflow prevention device 2 without removing the device 2 from the water supply system. For example, pressure sensors can be attached to the test ports 10, 12, 14, 16 and the various pressure readings compared. Under normal operating conditions, the pressure should drop as we move from each test port to the next downstream and the static pressure drop across each check valve 94, 100 should be at least 1.0 psi. If the pressure downstream of a check valve 94,100 is greater than the pressure upstream of the check valve 94, 100, or if the downstream pressure is within 1.0 psi of the upstream pressure, the check valve 94, 100 should close and prevent flow back through the check valve 94, 100.

Alternatively, the backflow prevention device 2 can be isolated from the water supply system by closing both of the ball valves 26, 28 by rotating the ball valve handles 108, 110 (FIG. 2). Water can then be supplied to the individual test ports 10, 12, 14, 16 at various pressures in order to exercise and test the individual check valves 94, 100. When water is supplied to a test port immediately downstream of a check valve at a pressure greater than the water upstream of the check valve, the check valve should close and no water should flow through the valve. Conversely, when the water pressure upstream of the check valve is sufficiently higher than the water pressure downstream of the check valve, the valve should open and water should flow through the check valve.

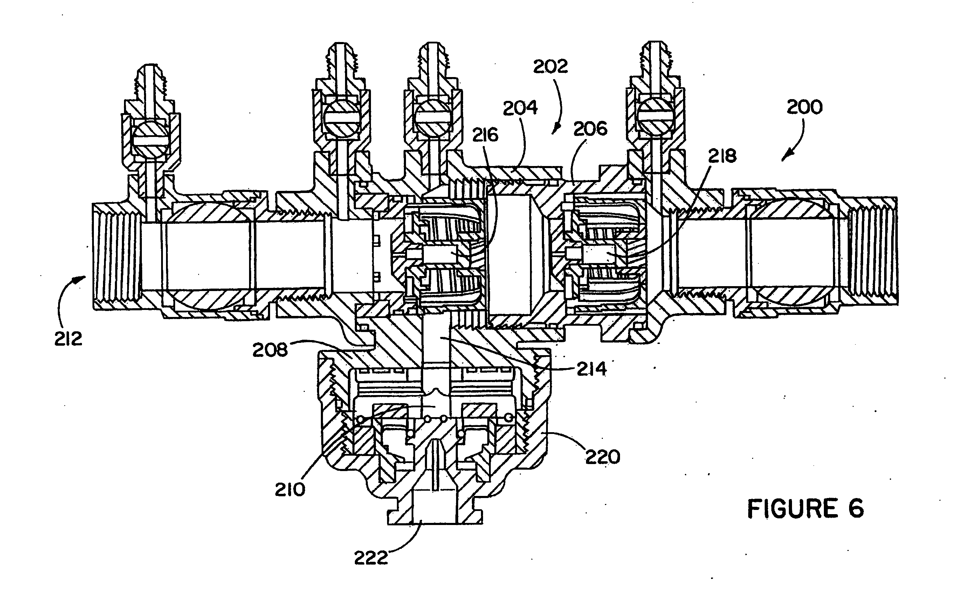

FIG. 6 depicts an alternative embodiment of a backflow prevention device 200 with a removable cartridge 202. The removable cartridge 202 comprises a slider receiver 204 and a slider 206. The slider receiver 204 is configured as described above, but with the addition of a relief valve docking station 208. A relief valve 210 is mounted in a relief valve cap 220 which is attached to the docking station 208, preferably by means of a threaded engagement. The relief valve cap 220 has an exit port 222. A relief channel 214 in the slider receiver 204 provides fluid communication between the fluid flow path 212 in the zone between the two check valves 216, 218 and the relief valve 210.

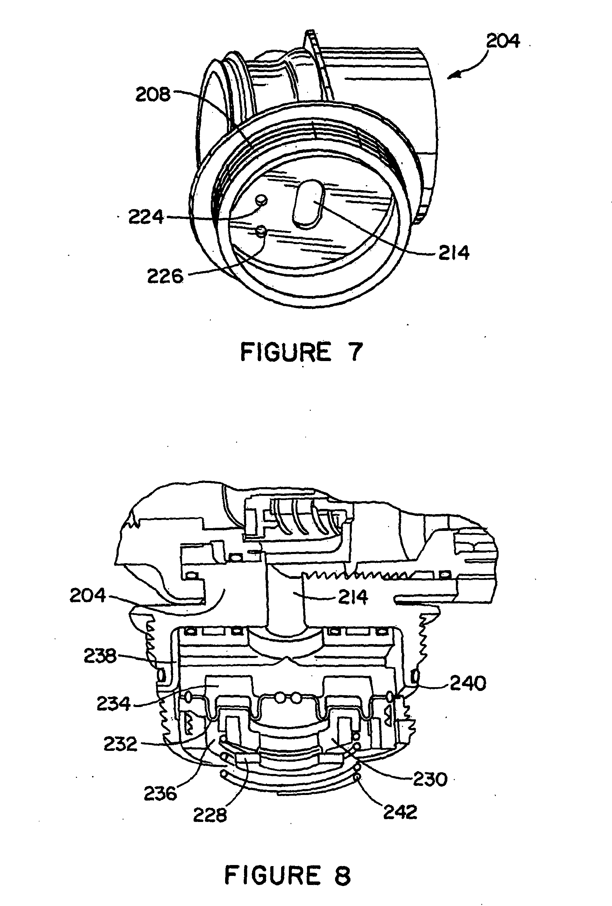

FIG. 7 shows a perspective view of the slider receiver 204 and relief valve docking station 208. Two supply pressure channels 224, 226 provide fluid communication between the flow path 212 (FIG. 6) on the upstream side of the first check valve 216 and the relief valve 210.

As best seen in FIG. 8, relief valve 210 (FIG. 6) comprises a valve seat 228 and a valve seal 230. A flexible diaphragm 232 divides the valve into a supply pressure chamber 234 and a control pressure chamber 236. Water is supplied to the supply pressure chamber 234 via the supply pressure channels 224, 226 (FIG. 7). Water is supplied to the control pressure chamber 236 via the relief channel 214. Water from the relief channel 214 flows through a channel 238 in a relief valve spacer 240, around the diaphragm 232 via gaps between the spacer 240 and the relief valve cap 220 (FIG. 6), and into the control pressure chamber 236 beneath the diaphragm 232. A spring 242 provides a force biasing the relief valve 210 toward an open position.

When the supply water pressure is greater than the pressure in the zone between the two check valves 216, 218, by more than a predetermined threshold, typically about 2 psi, the pressure in the supply pressure chamber 234 is sufficient to overcome the force of the water in the control pressure chamber 236 and the biasing force of the spring 242. If the pressure in the zone between the two check valves 94, 100 should approach within 2 psi of the supply pressure, the relief valve 210 opens and water from the zone is vented to atmosphere.

Under normal operating conditions, if water flow through the backflow prevention device 200 reduces to the point that the pressure drop across the second check valve 218 is less than 1.0 psi, the second check valve 218 should close, preventing flow in the reverse direction. If the second check valve 218 fails, the first check valve 216 should close, providing backup protection. If the second check valve fails 218, or if it does not seal tightly, leakage back through the valve 218 will cause the pressure in the zone between the two check valves 216, 218 to increase. If the pressure in the zone between the two check valves 216, 218 gets within a predetermined threshold of the supply pressure, typically about 2 psig, the relief valve 210 will open, dumping water from the zone between the two check valves 216, 218 out to atmosphere through the exit port 222, thereby reducing the possibility of contaminated water flowing back through the device 200 to the water supply system. Ordinarily, the relief valve 210 should be installed over a drain or plumbed to a drain with an appropriate air gap.

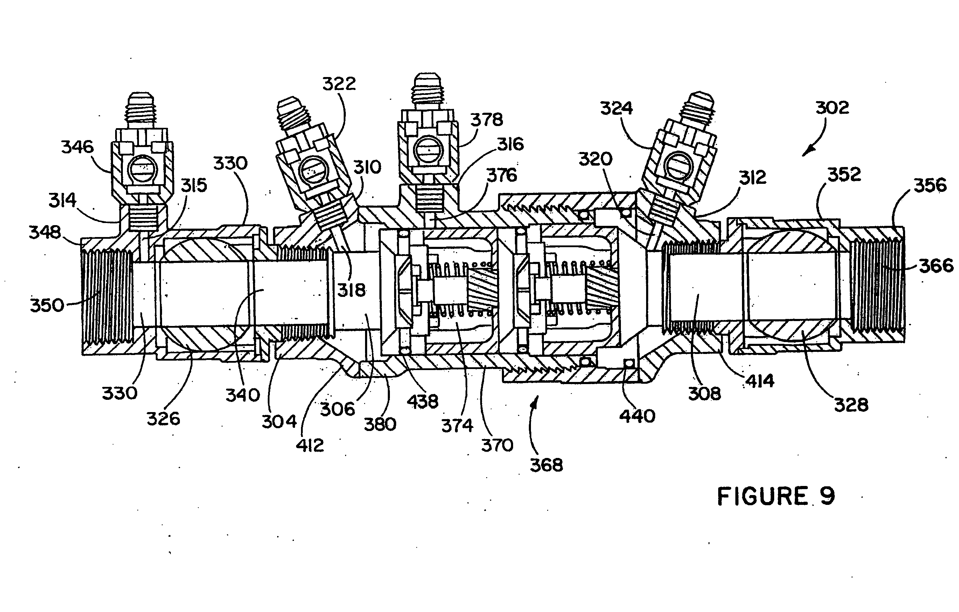

A second alternative embodiment of a backflow prevention device 302 is depicted in FIGS. 9-14. A main body 304 provides structural support for the other components. The main body 304 comprises an upstream portion 412 and a downstream portion 414, each having a fluid flow path 306, 308, respectively, therethrough at opposite ends of the main body 304. The test ports 310, 312 are in fluid communication with the fluid flow passages 306, 308 via test port channels 318, 320, respectively. The test ports 310, 312 allow for evaluation of the function of the backflow prevention device 302 in the manner described above with respect to the first described embodiment. A test port valve 322, 324 is attached to each test port 310, 312, respectively.

An inlet ball valve 326 and an outlet ball valve 328 make it possible to isolate the backflow prevention device 302 from the water system to which it is connected. The inlet ball valve 326 is mounted in a ball valve housing 330 which is mounted to the main body 304, preferably by means of a threaded engagement. A test port 314 is provided on the ball valve housing 330 and defines a fluid flow passage 315 that is in fluid communication with a fluid flow passage 340 of the ball valve housing 330. A test port valve 346 is attached to the test port 314. The upstream end 348 of the ball valve housing 330 is configured for connection to a source of water, preferably using a threaded connection via internal threading 350.

The outlet ball valve 328 is mounted in a second ball valve housing 352 which is mounted to the main body 304, preferably by means of a threaded engagement. The downstream end 356 of the second ball valve housing 352 is configured for connection to a downstream system, preferably using a threaded connection via internal threading 366.

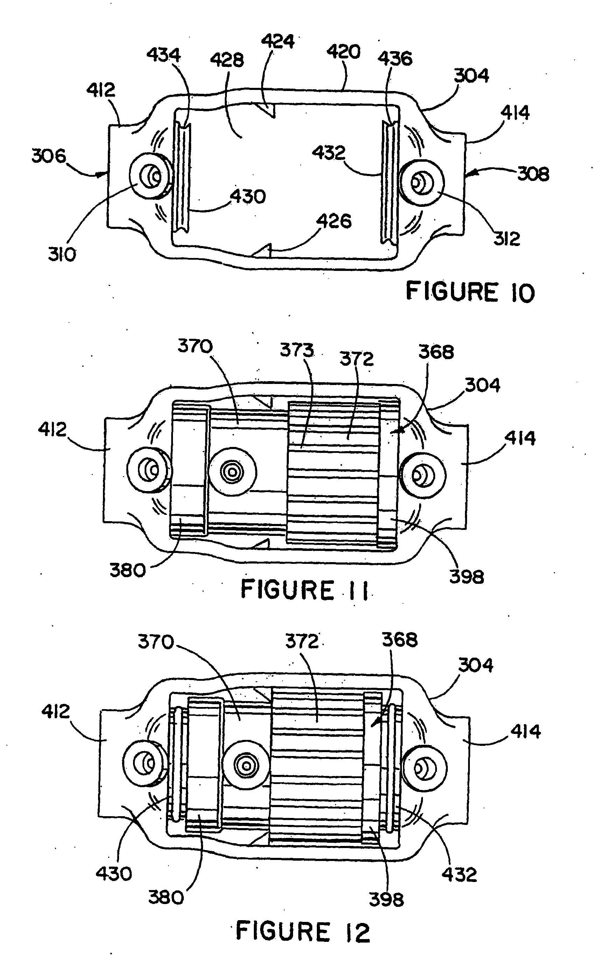

Referring now to FIG. 10, bridging portions 420, 422 join the upstream portion 412 and the downstream portion 414 of the main body 304 and have tabs or shoulders 424, 426, respectively, projecting from their inner faces. The upstream portion 412, the downstream portion 414, and the two bridging portions 420, 422 define an access passage 428 through the main body 304. The access passage 428 facilitates the installation, removal, and manipulation of a removable cartridge 368 (FIG. 9). Annular projections 430, 432 extend into the access passage 428 from the upstream portion 412 and downstream portion 414, respectively, of the main body 304. Each annular projection defines an outward facing annular groove 434, 436, respectively.

As illustrated in FIGS. 11-12, the removable cartridge 368 is designed to be easily mounted in the main body 304. The removable cartridge 368 comprises a central cartridge body 370 and a collar 372. The collar can be rotated from an extended position (FIG. 11) for securing the cartridge 368 in the main body 304 to a retracted position (FIG. 12) to release the cartridge 368 from the main body 304 for removal or installation.

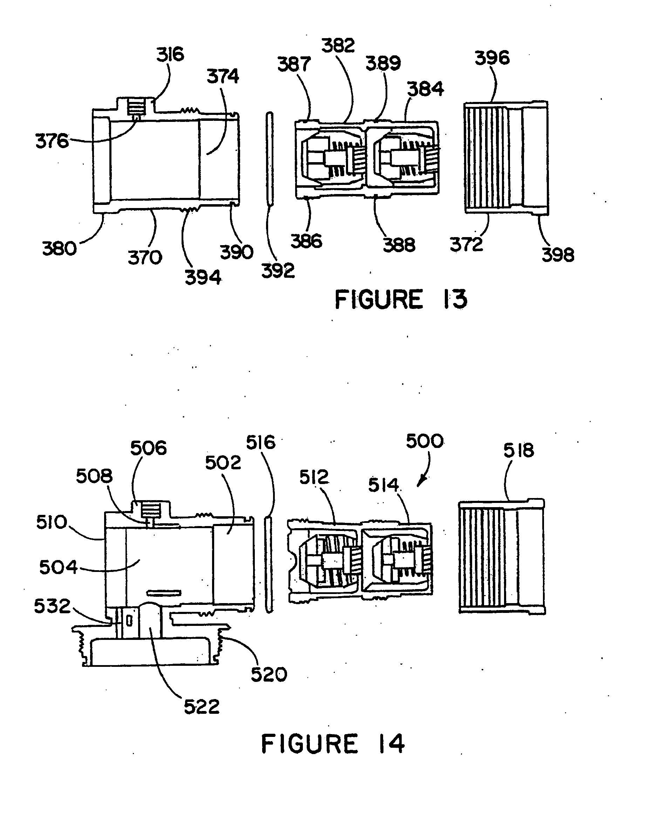

Referring now to FIGS. 9 and13, the central cartridge body 370 defines a fluid flow passage 374. A test port 316 is in fluid communication with the fluid flow passage 374 of the central cartridge body 370 via a test port channel 376. A test port valve 378 is attached to the test port 316. The upstream end 380 of the central cartridge body 370 is configured to fit over the annular projection 430 (FIG.10) at the upstream portion 412 of the main body 304. An o-ring 438, held in place by the annular groove 434 in the outer surface of the annular projection 430, provides for a watertight seal between the central cartridge body 370 and the main body 304.

Two check valves 382, 384 are disposed in series inside the central cartridge body 370. 0-rings 386, 388, held in place by annular grooves 387, 389, respectively, provide essentially watertight seals between the check valves 382, 384, respectively, and the central cartridge body 370. An annular groove 390 near the downstream end of the central cartridge body 370 holds an o-ring 392. External threading 394 on the central cartridge body 370 upstream of the annular groove 390 is configured to mate with internal threading 396 of the inside of the collar 372. The o-ring 392 provides an essentially watertight seal between the central cartridge body 370 and the collar 372 downstream of the threading 394. The downstream end 398 of the collar 372 is configured to fit over the annular projection 432 (FIG. 10) on the downstream portion of the main body 304, as illustrated in FIG. 11. An o-ring 440 (FIG. 9), held in place by an annular groove 436 (FIG. 10) defined by the outer surface of the annular projection 432, provides for a watertight seal between the collar 372 and the main body 304 when the collar 372 is in the extended position (FIG.11.).

When the removable cartridge 368 is mounted in the main body 304, with reference to FIGS. 11 and 12, the upstream end 380 of the central cartridge body 370 slides snugly on to the annular projection 430 of the upstream portion 412 of the main body 304, and the downstream end 398 of the collar 372 slides snugly on to the annular projection 432 of the downstream portion 414 of the main body 304, effectively holding the removable cartridge 368 in place.

The outer surface of the collar 372 includes a plurality of equally spaced, longitudinally extending ribs 373 to aid in the rotation of the collar 372, either manually or with a tool. When the collar is rotated in one direction, the threading 394, 396 (FIG. 13) causes the collar 372 to retract onto the central cartridge body 370 as depicted in FIG. 12, thereby reducing the effective overall length of the removable cartridge 368 and facilitating its removal from the main body 304.

FIG. 14 depicts an alternative configuration of a removable cartridge 500. A central cartridge body 502 defines a fluid flow passage 504. A test port 506 is in fluid communication with the fluid flow passage 504 via a test port channel 508. The upstream end 510 of the central cartridge body 502 is configured to fit over the annular projection 430 (FIG. 10) on the upstream portion 412 of the main body 304.

Two check valves 512, 514, an o-ring 516, and a collar 518 are configured as described above for the second alternative embodiment of the removable cartridge 368. The central cartridge body 502 further includes a relief valve docking station 520. A relief channel 522 in the central cartridge body 502 provides fluid communication between the fluid flow path 504 through the central cartridge body 502 in the region between the two check valves 512, 514 and the relief valve docking station 520. One or more supply pressure channels 532 provide water at supply pressure from fluid flow path 504 upstream of the first check valve 512 to the relief valve docking station 520.

The relief valve docking station 520 mates with a relief valve 210 (FIG. 6) mounted in a relief valve cap 220 (FIG. 6) as described above in relation to the first alternative embodiment of the backflow prevention device. The relief valve components are as described above and depicted in FIG. 8.

The foregoing relates to preferred exemplary embodiments of the invention. It is understood that other embodiments and variants are possible which lie within the spirit and scope of the invention as set forth in the following claims.

## Claims

1. A backflow prevention device comprising:
a main body having an upstream end and a downstream end;
a first shut-off valve attached to the upstream end of the main body;
a second shut-off valve attached to the downstream end of the main body; and
a check valve cartridge removably mounted along the main body between the first shut-off valve and the second shut-off valve to prevent reverse flow, the check valve cartridge comprising:
a first check valve;
a second check valve;
a first cartridge structural member;
a second cartridge structural member;
the first cartridge structural member and the second cartridge structural member are rotatable relative to one another to be capable of being displaced relative to one another to alter the overall size of the check valve cartridge to facilitate installation and removal of the check valve cartridge.

2. The backflow prevention device in accordance with claim 1 wherein the first cartridge structural member comprises a central cartridge body and the first check valve and the second check valve are housed within the central cartridge body.

3. The backflow prevention device in accordance with claim 2 wherein the second cartridge structural member comprises a rotating collar attached to the central cartridge body.

4. The backflow prevention device in accordance with claim 3 wherein the central cartridge body and the collar have a first position relative to one another wherein the collar extends from the central cartridge body to increase the length of the check valve cartridge to engage the main body and a second position relative to one another wherein the collar retracts to the central cartridge body to reduce the length of the check valve cartridge to disengage the check valve cartridge from the main body to facilitate installation or removal of the check valve cartridge.

5. The backflow prevention device in accordance with claim 4 wherein a threaded engagement rotatably interconnects the central cartridge body and the collar for rotation of the collar between the first position and the second position.

6. The backflow prevention device in accordance with claim 5 wherein the threaded engagement includes external threading on the central cartridge body and cooperating internal threading on the collar.

7. The backflow prevention device in accordance with claim 5 wherein a first seal is disposed between the central cartridge body and the collar, a second seal is disposed between the central cartridge body and the main body, and a third seal is disposed between the collar and the main body.

8. The backflow prevention device in accordance with claim 3 wherein the first check valve, the second check valve, the central cartridge body, and the collar are aligned along a common longitudinal axis.

9. The backflow prevention device in accordance with claim 1 further comprising a pressure compensation valve to relieve pressure from a zone disposed between the first check valve and the second check valve when the pressure in the zone exceeds a predetermined level relative to a supply pressure.

10. The backflow prevention device in accordance with claim 9 wherein the pressure compensation valve includes a removable cartridge containing valve components to permit replacement of the valve components.

11. The backflow prevention device in accordance with claim 1 wherein at least one of the first check valve and the second check valve includes a valve, a plunger being attached to the valve, and a plunger guide, the guide receiving at least a portion of the plunger to guide the valve for linear reciprocation, and the valve guide defining at least one groove to flush debris from between the plunger and the guide.

12. The backflow prevention device in accordance with claim 1 wherein the first check valve is housed in the first cartridge structural member and the second check valve is housed within the second cartridge structural member.

13. The backflow prevention device in accordance with claim 12 wherein the first cartridge structural member and the second cartridge structural member have a first position relative to one another wherein the first cartridge structural member and the second cartridge structural member are spread to engage the main body and a second position relative to one another wherein the first cartridge structural member and the second cartridge structural member retract to disengage from the main body to facilitate installation or removal of the check valve cartridge.

14. The backflow prevention device in accordance with claim 13 wherein a threaded engagement rotatably interconnects the first cartridge structural member and the second cartridge structural member for rotation to move the first cartridge structural member and second cartridge structural member between the first position and the second position.

15. The backflow prevention device in accordance with claim 14 wherein the threaded engagement includes internal threading on the first cartridge structural member and external threading on the second cartridge structural member.

16. The backflow prevention device in accordance with claim 13 wherein a first seal is disposed between the first cartridge structural member and the second cartridge structural member, a second seal is disposed between the first cartridge structural member and the main body, and a third seal is disposed between the second cartridge structural member and the main body.

17. The backflow prevention device in accordance with claim 12 wherein the first check valve, the second check valve, the first cartridge structural member, and the second cartridge structural member are aligned along a common longitudinal axis.

18. A valve cartridge comprising:
a first check valve;
a second check valve;
a first cartridge structural member;
a second cartridge structural member;
at least one of the first cartridge structural member and the second cartridge structural member defining a longitudinal fluid flow path from the first check valve to the second check valve;
the first cartridge structural member and the second cartridge structural member being rotatable relative to one another to be capable of being displaced relative to one another to alter the overall size of the valve cartridge between a first size for use and a second size for installation and removal of the valve cartridge from a fluid supply system.

19. The valve cartridge in accordance with claim 18 wherein the first cartridge structural member comprises a central cartridge body and the first check valve and the second check valve are disposed in the central cartridge body.

20. The valve cartridge in accordance with claim 19 wherein the second cartridge structural member comprises a collar.

21. The cartridge in accordance with claim 20 wherein the central cartridge body and the collar are aligned along a common longitudinal axis and are capable of being longitudinally displaced relative to one another between the first size and the second size.

22. The valve cartridge in accordance with claim 21 wherein a threaded engagement rotatably interconnects the central cartridge body and the collar.

23. The valve cartridge in accordance with claim 22 wherein the threaded engagement includes external threading on the central cartridge body and cooperating internal threading on the collar.

24. The valve cartridge in accordance with claim 22 wherein a seal is disposed between the central cartridge body and the collar.

25. The valve cartridge in accordance with claim 19 further comprising a pressure compensation valve to relieve pressure from a zone disposed between the first check valve and second check valve when the pressure in the zone exceeds a predetermined level relative to a supply pressure.

26. The valve cartridge in accordance with claim 25 wherein the pressure compensation valve includes a removable cartridge containing valve components to permit replacement of the valve components.

27. The valve cartridge in accordance with claim 19 wherein at least one of the first check valve and the second check valve includes a valve, a plunger being attached to the valve, and a plunger guide, the plunger guide receiving at least a portion of the plunger to guide the valve for linear reciprocation, and the plunger guide defining at least one groove to flush debris from between the plunger and the plunger guide.

28. The valve cartridge in accordance with claim 18 wherein the first check valve is associated with the first cartridge structural member and the second check valve is associated with the second cartridge structural member.

29. The valve cartridge in accordance with claim 28 wherein the first cartridge structural member and the second cartridge structural member are aligned along a common longitudinal axis and are capable of being longitudinally displaced relative to one another to move between the first size and the second size.

30. The valve cartridge in accordance with claim 29 wherein a threaded engagement interconnects the first cartridge structural member and the second cartridge structural.

31. The valve cartridge in accordance with claim 28 further comprising a pressure compensation valve to relieve pressure from a zone disposed between the first check valve and the second check valve when the pressure in the zone exceeds a predetermined level relative to a supply pressure.

32. The valve cartridge in accordance with claim 31 wherein the pressure compensation valve includes a removable cartridge containing valve components to permit replacement of the valve components.

33. The valve cartridge in accordance with claim 28 wherein at least one of the first check valve and second check valve include a valve, a plunger being attached to the valve, and a plunger guide, the plunger guide receiving at least a portion of the plunger to guide the valve for linear reciprocation, and the plunger guide defining at least one groove to flush debris from between the plunger and the plunger guide.

34. A valve device comprising:
a valve seat;
a valve for engagement with the valve seat;
a valve plunger attached to the valve;
a plunger guide that receives at least a portion of the valve plunger and guides reciprocation of the valve from at least a first position engaged with the valve seat to prevent flow through the valve seat and a second position spaced from the valve seat to permit flow through the valve seat, and the plunger guide defining at least one groove to allow debris to pass between the plunger and the plunger guide.

35. The valve device in accordance with claim 34 wherein the plunger guide defines an elongated tube that receives the plunger and has an interior wall that engages the plunger to guide the plunger and the interior wall defines the at least one groove.

36. The valve device in accordance with claim 35 wherein the at least one groove has a spiral configuration.

37. The valve device in accordance with claim 36 wherein the at least one groove consists of a plurality of grooves.

38. A method for installing a removable valve cartridge in a backflow prevention device comprising:
providing a main body having an upstream end and a downstream end and a removable valve cartridge comprising: a first valve, a second valve, a first cartridge segment, and a second cartridge segment, with the first cartridge segment and the second cartridge segment being rotatable relative to one another to be capable of being displaced relative to one another to alter the overall size of the valve cartridge;
disposing the removable valve cartridge in the main body between the upstream end and the downstream end;
rotating the second cartridge segment relative to the first cartridge segment so as to increase the overall length of the removable valve cartridge, thereby securing the removable valve cartridge in the main body.

39. The method of claim 38 wherein the first cartridge segment comprises first threading and the second cartridge segment comprises cooperating second threading.
